# EUROPEAN PATENT APPLICATION

(11) **EP 2 234 433 A1**
(43) Date of publication of application: **29.09.2010**
(21) Application number: 09702089.5
(22) Date of filing: 16.01.2009
(51) Int. Cl.: H04W 28/14, H04L 12/56, H04W 4/06

(54) **RADIO COMMUNICATION SYSTEM, DATA DISTRIBUTION METHOD, BASE STATION, BASE STATION CONTROL DEVICE, AND PROGRAM**

(30) Priority: 16.01.2008 JP 2008007036
(71) Applicant: NEC Corporation, Minato-ku Tokyo 108-8001 (JP)
(72) Inventor: KATO, Hidenori, Tokyo 108-8001 (JP)
(74) Representative: Glawe, Delfs, Moll
(86) International application number: PCT/JP2009/050569
(87) International publication number: WO 2009/091042

(57) **Abstract**

Processing load of a distribution source and traffic between the distribution source and a radio base station, which are involved in repeatedly transmitting broadcast data, are reduced. A radio communication system includes a distribution device which distributes broadcast data or multicast data, and a radio base station. The radio base station 11 has saving means for saving broadcast data or multicast data received from a distribution device; and distribution means for repeatedly distributing the saved broadcast data or multicast data to a mobile station at a predetermined distribution timing (FIG. 1).

## Description

### TECHNICAL FIELD

### [CROSS-REFERENCE TO RELATED APPLICATION]

The present invention is based upon and claims the benefit of the priority of Japanese patent application No. 2008-007036 (filed on January 16, 2008), the disclosure of which is incorporated herein in its entirety by reference thereto.
The present invention relates to a radio communication system, a data distribution method, a base station, a base station control device, and a program, and more particularly to a radio communication system, a data distribution method, a base station, a base station control device, and a program for distributing broadcast data or multicast data.

### BACKGROUND ART

In 3GPP(3rd Generation Partnership Project), the specifications for MBMS(Multimedia Broadcast Multicast Service) are defined as the broadcast function and the multicast function for use in the W-CDMA system.

Patent Document 1 discloses a mobile communication system that has a buffer in which broadcast data, transmitted from other nodes, is temporarily stored for retransmission. When a data frame retransmission request signal is received from a mobile station, the radio base station described in the document encodes the data frames stored in the buffer and transmits the encoded data using the transmission power calculated by a predetermined expression.

Patent Document 2 discloses an information distribution system that comprises distribution destination cells, a distribution terminal used for specifying a distribution time, and a distribution management server that starts the information distribution procedure for a subscriber's device according to a specification received from the distribution terminal.

[Patent Document 1] Japanese Patent Kokai Publication No. JP-P2006-135400A
[Patent Document 2] Japanese Patent Kokai Publication No. JP-P2007-128151 A
[Non-Patent Document 1] 3GPP TS 23.246 V8.1.0 (Multimedia Broadcast/Multicast Service(MBMS);Architecture and functional description (Release 8))

### DISCLOSURE OF THE INVENTION

### PROBLEMS TO BE SOLVED BY THE INVENTION

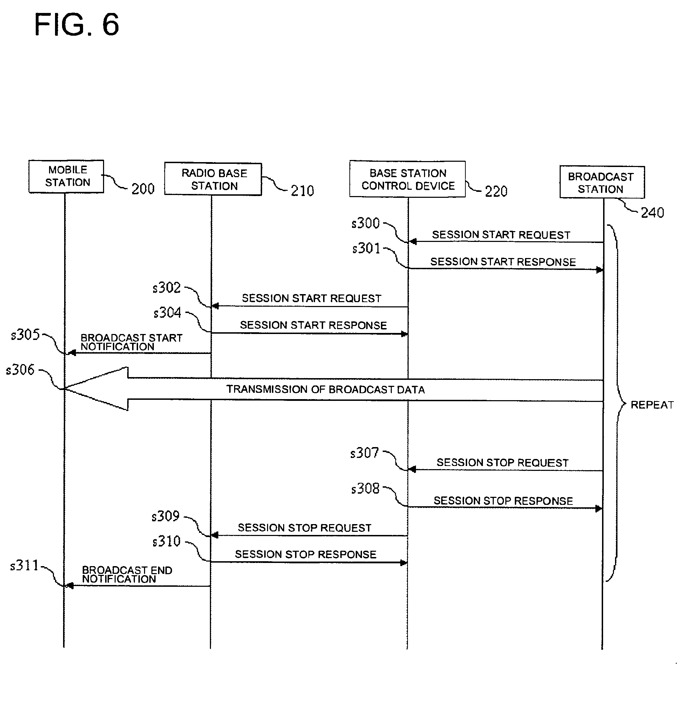

All the disclosed contents of Patent Documents 1 and 2 and Non-Patent Document 1 given above are hereby incorporated by reference thereto. The following analysis is given in the light of the present invention.
In the radio communication system disclosed in Patent Document 1 and so on, broadcast data is transmitted as follows. When broadcast data is transmitted from a broadcast station 240 that is the distribution source in the sequence diagram shown in FIG. 6, the broadcast station 240 establishes a session with a base station control device (radio control station) 220 (s300, s301). Next the base station control device (radio control station) 220 establishes a session with a radio base station 210 (s302, s304). And, after the radio base station 210 transmits a broadcast start notification to a mobile station 200 (s305), the broadcast station 240 transmits broadcast data to the mobile station 200 (see 8.3 MBMS Session Start Procedure in Non-Patent Document 1).

After the transmission is ended, the broadcast station 240 first stops the session with the base station control device (radio control station) 220 (s307, s308). Next, the base station control device (radio control station) 220 stops the session with the radio base station 210 (s309, s310). After that, the radio base station 210 transmits a broadcast end notification to the mobile station 200 (s311) (see 8.5 MBMS Session Stop Procedure in non-Patent Document 1).

However, the problem with the data distribution method in Non-Patent Document 1 described above is that, when the same broadcast data is transmitted repeatedly, the operations s300 - s311 described above must be performed repeatedly and that this repeated operation increases the processing load of the broadcast station 240 and wastefully increases the traffic between the broadcast station 240 and the radio base station 210.

Meanwhile, the radio base station described in Patent Document 1 increases the transfer efficiency of broadcast data at retransmission time, but the document does not mention an increase in the processing efficiency when the same broadcast data is transmitted from the distribution source such as the broadcast station 240.

Patent Document 2 discloses a configuration in which a distribution management server is provided in the gateway between a radio base station and a subscriber's station, but this configuration does not reduce the waste involved in repeatedly transmitting broadcast data between the broadcast station and the radio base station. In addition, the distribution service described in the document is carried out independently of the session start/end processing that is performed between the broadcast station 240 and the radio base station 210 for efficiently using the radio resources.

In view of the foregoing, it is an object of the present invention to provide a radio communication system, a data distribution method, a base station, a base station control device, and a program for increasing the efficiency of the repeated transmission of broadcast data or multicast data transmitted from a distribution source.

### MEANS TO SOLVE THE PROBLEMS

According to a first aspect of the present invention, there is provided a radio communication system comprising a distribution device, which distributes broadcast data or multicast data, and a radio base station. The radio base station comprises saving (storing) means for saving (storing) the broadcast data or multicast data received from the distribution device; and distribution means for repeatedly distributing the saved broadcast data or multicast data to a mobile station at a predetermined distribution timing.

According to a second aspect of the present invention, there is provided a method for distributing broadcast data or multicast data for use in a radio communication system. The method comprises a step, performed by a radio base station or a base station control device in the radio communication system, for receiving broadcast data or multicast data from a distribution source and saving the received data; and a step, performed by the radio base station or base station control device that has saved the broadcast data or multicast data, for repeatedly distributing the broadcast data or multicast data to a mobile station at a predetermined timing.

According to a third aspect of the present invention, there is provided a radio base station or a base station control device comprising saving means for saving broadcast data or multicast data received from a distribution source; and distribution means for repeatedly distributing the saved broadcast data or multicast data to a lower-level node at a predetermined distribution timing.

According to a fourth aspect of the present invention, there is provided a program causing a computer, which acts as a radio base station or a base station control device, to perform processing for receiving broadcast data or multicast data from a distribution source and saving the received data; and processing for repeatedly distributing the saved broadcast data or multicast data to a lower-level node at a predetermined timing.

### MERITORIOUS EFFECTS OF THE INVENTION

The present invention reduces both processing load of the distribution source (distribution device) and traffic between the distribution source (distribution device) and a radio base station (or between the distribution source (distribution device) and a base station control device) when broadcast data or multicast data is transmitted repeatedly at a predetermined distribution timing. The reason is that the system is configured in such a way that repeatedly-transmitted broadcast data or multicast data is saved in at least one of the radio base station and the base station control device for repeated distribution.

### BRIEF DESCRIPTION OF THE DRAWINGS

FIG. 1 is a diagram schematically showing a radio communication system of the present invention.
FIG. 2 is a block diagram showing the configuration of a radio communication system in a first exemplary embodiment of the present invention.
FIG. 3 is a sequence diagram showing the operation of a mobile station, a radio base station, and a broadcast station in the first exemplary embodiment of the present invention.
FIG. 4 is a block diagram showing the configuration of a radio communication system in a second exemplary embodiment of the present invention.
FIG. 5 is a sequence diagram showing the operation of a mobile station, a radio base station, a base station control device, and a broadcast station in the second exemplary embodiment of the present invention.
FIG. 6 is a sequence showing the broadcast communication in the radio communication system described in Patent Document 1 and so on.

### EXPLANATIONS OF SYMBOLS

- 10,100,200: Mobile station
- 11,110,210: Radio base station
- 12,112,222: Control unit
- 14,114,224: Accumulation unit
- 20: Distribution device
- 111: IF unit (interface unit)
- 113,211: Radio unit
- 120,230: Switch
- 130,240: Broadcast station
- 140,250: Core network
- 150: User terminal
- 220: Base station control device (radio control station)
- 221: First IF unit (interface unit)
- 223: Second IF unit (interface unit)

### PREFERRED MODES FOR CARRYING OUT THE INVENTION

Next, preferred modes for carrying out the present invention will be described more in detail below with reference to the drawings.

### [Overview of the invention]

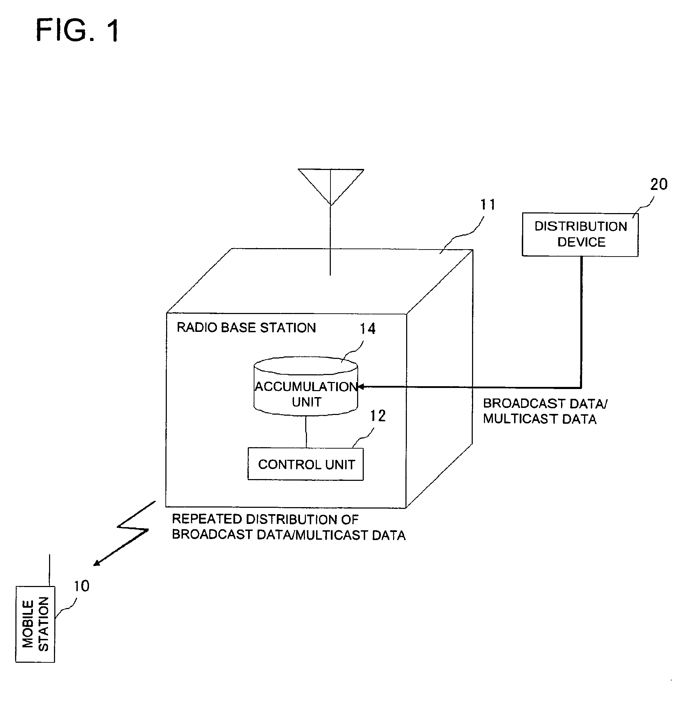

First, the following describes an overview of the present invention with reference to FIG. 1. FIG. 1 is a diagram schematically showing the radio communication system of the present invention. Referring to FIG. 1, a radio base station 11 is shown that is connected to a distribution device 20, such as a broadcast station (Broadcast Multicast Service Center), for transmission of broadcast data or multicast data, received from the distribution device 20, to a mobile station 10.

The radio base station 11 comprises an accumulation unit 14 that functions as saving means for saving broadcast data or multicast data received from the distribution device 20 and a control unit 12 that functions as distribution means for repeatedly distributing the saved broadcast data or multicast data to the mobile station 10 at a predetermined distribution timing.

The control unit 12 repeatedly distributes the broadcast data or the multicast data, received from the distribution device 20, according to the distribution timing information received in advance from the distribution device 20.

In the radio communication system having the radio base station 11 described above, the broadcast data or the multicast data transmitted from the distribution device 20 is saved in the accumulation unit 14 for repeated distribution on an as-needed basis. That is, when the same broadcast data or multicast data is distributed repeatedly, this configuration eliminates the need for retransmission from the distribution device 20, thus reducing both the load of the distribution device 20 and the traffic between the distribution device 20 and the radio base station 11.

A modified configuration may also be employed in which the control unit 12 and the accumulation unit 14 described above are provided not in the radio base station 11 but in the base station control device. In this case, the same broadcast data or multicast data is distributed repeatedly to a mobile station via a radio base station managed by the base station control device.

### [First Exemplary Embodiment]

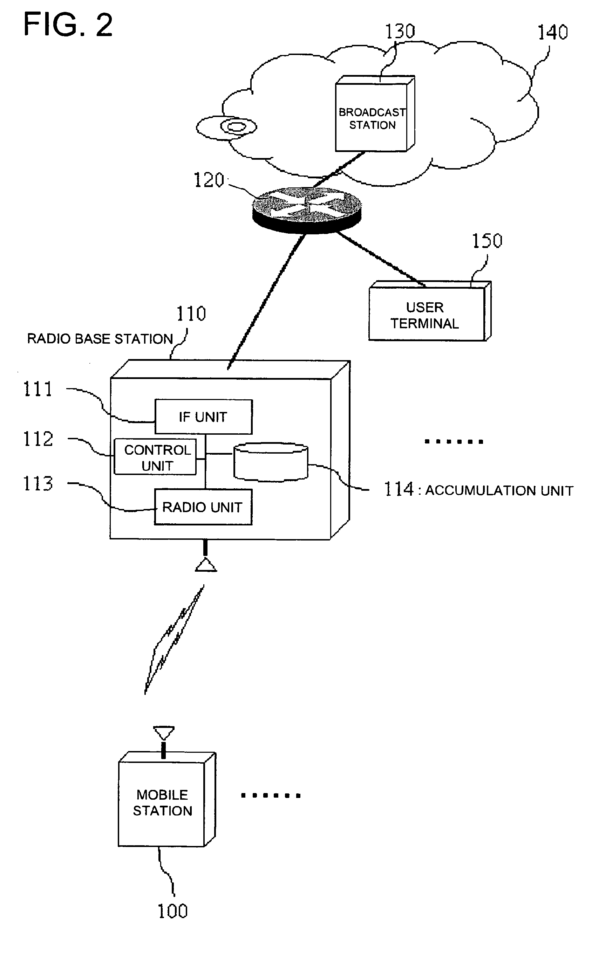

FIG. 2 is a block diagram showing the configuration of a radio communication system in a first exemplary embodiment of the present invention. Referring to FIG. 2, the system comprises a broadcast station 130 that is a data distribution device (distribution source) provided on a core network 140, a radio base station 110 that receives broadcast data or multicast data (hereinafter simply called broadcast data) from the broadcast station 130 via a switch 120, and a mobile station 100 that receives broadcast data from the radio base station 110. A user terminal 150 in FIG. 2 is a general-user's personal computer that functions as a device (distribution source) that distributes broadcast data in the same manner as the broadcast station 130.

The radio base station 110 comprises an IF unit (interface unit) 111, a control unit 112, a radio unit 113, and an accumulation unit 114. The following describes the units of the radio base station 110.

The IF unit 111 provides the interface function for communicating with the core network 140 that includes the broadcast station 130. More specifically, the IF unit 111 receives a session start (stop) request message, which will be described later, and broadcast data from the broadcast station 130 and returns a response message.

The control unit 112 has the function to extract distribution timing information, which specifies a broadcast data transmission time and period, from a message received from the broadcast station 130 and the function to instruct the accumulation unit 114 to save, transmit, or delete broadcast data based on the distribution timing information.

The distribution timing information is specified in the form of a distribution period such as "every hour starting at 0:00am, January 1st". The distribution timing may also be specified in the form of a distribution time-of-day such as "12:00 on every Sunday".

The radio unit 113 transmits broadcast data, transmitted from the broadcast station 130, to the mobile station 100 via a radio channel.

The accumulation unit 114 has the following functions that are executed according to an instruction from the control unit 112: that is, the function to save broadcast data transmitted from the broadcast station 130, the function to transmit saved broadcast data to the mobile station 100, and the function to delete broadcast data.

Note that the functions of the control unit 112 described above may be implemented by the programs executed by a computer that acts as the radio base station 110.

The broadcast station 130 has the function to notify the radio base station 110 about the start of broadcast data transmission and to transmit the transmission time and period information and the function to request to stop the transmission of broadcast data or to delete broadcast data.

The other components shown in FIG. 2, such as the mobile station 100, switch 120, and core network 140, may employ the configuration well-known to those skilled in the art.

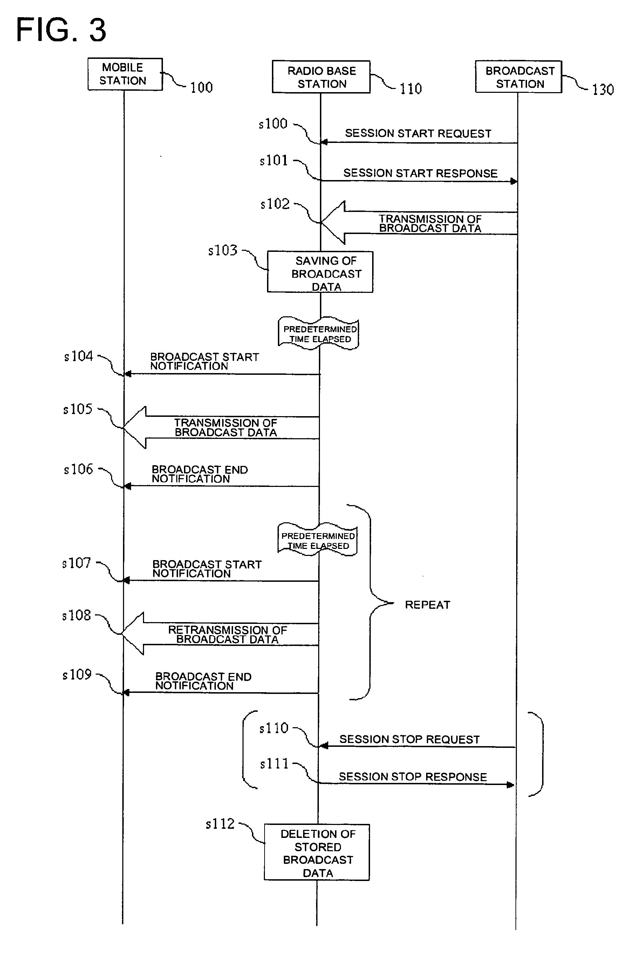

Next, the following describes the operation of the mobile station 100, radio base station 110, and broadcast station 130 with reference to the sequence flow shown in FIG. 3.

Referring to FIG. 3, the broadcast station 130 first transmits a session start request to the radio base station 110 (step s100). In response to the session start request, the radio base station 110 transmits a session start response (step s101). In response to the session start response, the broadcast station 130 starts the transmission of broadcast data (step s102).

Assume that the session start request message transmitted in step s100 described above includes the distribution timing information on the broadcast data.

The control unit 112 of the radio base station 110 stores therein the distribution timing information included in the session start request received in step s100 described above and, at the same time, saves the received broadcast data, as well as its corresponding distribution timing information, in the accumulation unit 114 (step s103).

The control unit 112 of the radio base station 110 notifies the mobile station 100 about the start of broadcast according to the stored distribution timing information (step s104) and, after that, transmits the broadcast data (step s105).

After the transmission of the broadcast data is completed, the control unit 112 of the radio base station 110 transmits the broadcast end notification (step s106).

Even after that, the radio base station 110 repeatedly transmits the broadcast start request (step s107), retransmits the broadcast data (step s108), and transmits the broadcast end notification (step s109) according to the stored distribution timing information.

After that, the broadcast station 130 transmits a session stop request to the radio base station 110 (step s110). When the session stop request is received, the radio base station 110 transmits the session stop response to end the repeated distribution of the broadcast data described above (step s111). After that, the radio base station 110 deletes the stored distribution timing information and the broadcast data (step s112).

As described above, even when the broadcast data is repeatedly distributed, this exemplary embodiment allows the second and the following distribution of broadcast data to be performed without having to transmit broadcast data from the broadcast station 130, thus reducing both the load of the broadcast station 130 and the traffic between the broadcast station 130 and the radio base station 110.

Although the radio base station 110 deletes the broadcast data after receiving a session stop request from the broadcast station 130 in the exemplary embodiment described above, not only the distribution timing information on the broadcast data but also the expiration date of the broadcast data may be included in the message transmitted when the session start request is issued in step s100. In such a case, the radio base station 110 deletes the expired broadcast data from the accumulation unit 114. Deleting data in this way makes the capacity of the accumulation unit 114 of the radio base station 110 available for better use.

Especially, in the exemplary embodiment above, the repeated distribution of broadcast data or multicast data to a mobile station before the session stop request is received from the broadcast station 130 prevents the broadcast station 130 from being overloaded.

Furthermore, the configuration of this exemplary embodiment, in which the distribution timing information is included in the session start request message received from the broadcast station 130, allows the present invention to be implemented simply by adding the function to the radio base station 110.

Although the distribution source of broadcast data is the broadcast station 130 in the exemplary embodiment described above, the user terminal 150 may also transmit broadcast data and its distribution timing information to the radio base station 110 to allow data, received from a general user, to be processed in the same manner.

Next, a second exemplary embodiment of the present invention will be described in which the above-described temporary saving destination (accumulation unit 114 in FIG. 2) of broadcast data is provided in the base station control device.

### [Second Exemplary Embodiment]

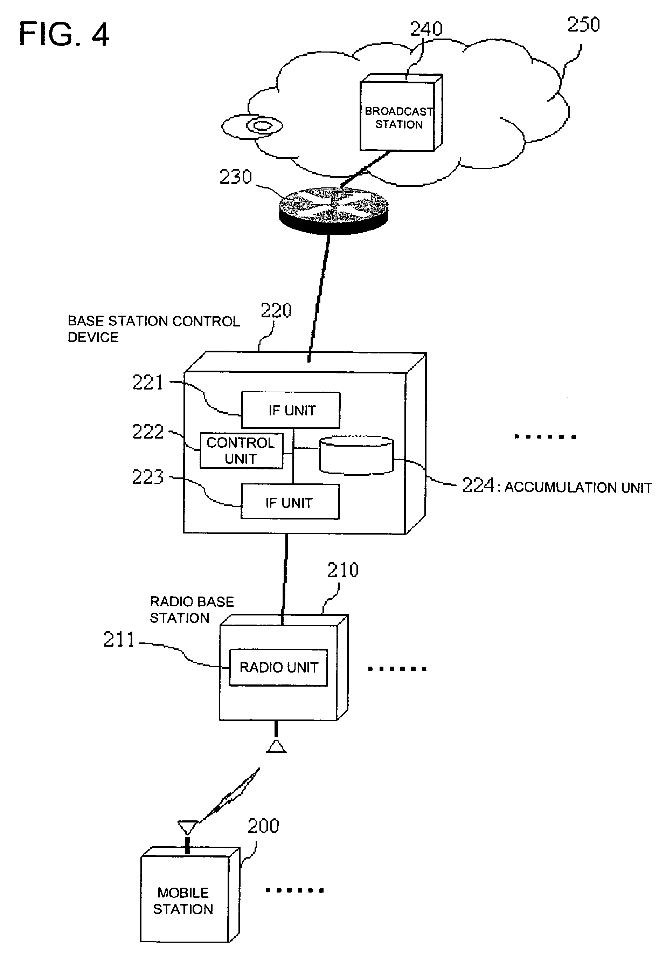

Referring to FIG. 4, a system in the second exemplary embodiment comprises a broadcast station 240 provided on a core network 250, a base station control device (radio control station) 220 that receives broadcast data from the broadcast station 240 via a switch 230, a radio base station 210, and a mobile station 200 that receives broadcast data from the radio base station 210.

The base station control device 220 comprises a first IF unit (interface unit) 221, a control unit 222, a second IF unit (interface unit) 223, and an accumulation unit 224. The following describes the units of the base station control device 220.

The IF unit 221 provides the interface function to communicate with the core network 250 that includes the broadcast station 240. More specifically, the IF unit 221 receives a session start(stop) request message and broadcast data, which will be described later, from the broadcast station 240 and returns a response message.

The control unit 222 has the function to extract distribution timing information, which specifies the broadcast data transmission time and period, from the message received from the broadcast station 240 and the function to instruct the accumulation unit 224 to save, transmit, or delete broadcast data based on the distribution timing information.

The IF unit 223 provides the interface function for communicating with the radio base station 210. More specifically, the IF unit 223 transmits a session start(stop) request message and broadcast data, which will be described later, to the radio base station 210 and receives a response message.

The accumulation unit 224 has the following functions that are executed according to an instruction from the control unit 222: that is, the function to save broadcast data transmitted from the broadcast station 240, the function to transmit saved broadcast data to the mobile station 200 via the IF unit 223, and the function to delete broadcast data.

Note that the functions of the control unit 222 described above may be implemented by the programs executed by a computer that acts as the base station control device 220.

The radio base station 210 has a radio unit 211 that transmits broadcast data, transmitted from the broadcast station 240, to the mobile station 200 via a radio channel.

The broadcast station 240 has the function to notify the radio base station 210 about the start of broadcast data transmission and to transmit the distribution timing information, which specifies the transmission time and period, and the function to request to stop the transmission of broadcast data or to delete broadcast data.

The other components shown in FIG. 4, such as the mobile station 200, switch 230, and core network 250, may employ the configuration well-known to those skilled in the art.

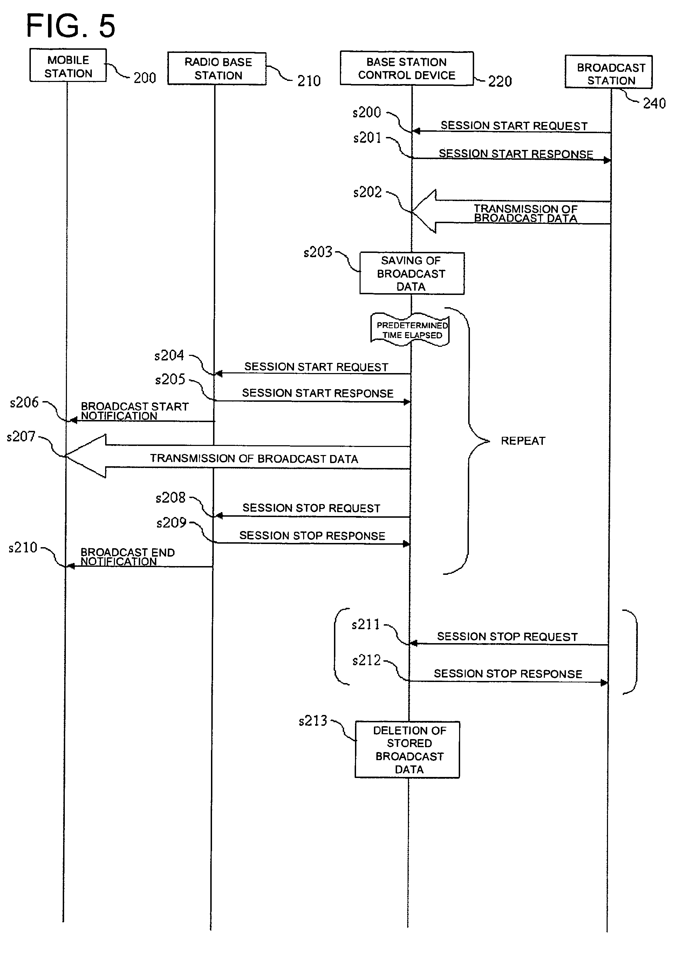

Next, the following describes the operation of the mobile station 200, radio base station 210, base station control device 220, and broadcast station 240 with reference to the sequence flow shown in FIG. 5.

Referring to FIG. 5, the broadcast station 240 first transmits a session start request to the base station control device 220 (step s200). In response to the session start request, the base station control device 220 transmits a session start response (step s201). In response to the session start response, the broadcast station 240 starts the transmission of broadcast data (step s202).

Assume that the session start request message transmitted in step s200 described above includes the distribution timing information on the broadcast data in the same manner as in the first exemplary embodiment.

The control unit 222 of the base station control device 220 stores therein the distribution timing information included in the session start request received in step s200 described above and, at the same time, saves the received broadcast data, as well as its corresponding distribution timing information, in the accumulation unit 224 (step s203).

The control unit 222 of the base station control device 220 transmits a session start request to the radio base station 210 according to the stored distribution timing information (step s204). And, the radio base station 210 transmits a session start request (step s205).

The radio base station 210 notifies the mobile station 200 about the start of broadcast (step s206), and the base station control device 220 starts transmitting the broadcast data in response to the session start response from the radio base station 210 (step s207).

After that, the base station control device 220 repeatedly performs the processing from the transmission of the session start request to the transmission of the broadcast end notification (steps s204-S209 [sic. S210]) according to the saved distribution timing information (see FIG. 5).

And, the broadcast station 240 transmits a session stop request to the base station control device 220 (step s211). When the session stop request is received, the base station control device 220 transmits the session stop response (step s212).

After that, the base station control device 220 deletes the stored distribution timing information and the broadcast data (step s213).

As described above, this exemplary embodiment allows the second and the following distribution of broadcast data to be performed without having to transmit broadcast data from the broadcast station 240 even when the broadcast data is repeatedly distributed, thus reducing both the load of the broadcast station 240 and the traffic between the broadcast station 240 and the base station control device 220. In addition, this exemplary embodiment has the advantages over the first exemplary embodiment described above in that the control unit 112 and the accumulation unit 114 need not be provided in each radio base station.

Although the base station control device 220 deletes the broadcast data after receiving the session stop request from the broadcast station 240 in the exemplary embodiment described above, not only the distribution timing information on the broadcast data but also the expiration date of the broadcast data may be included in a message transmitted when the session start request is transmitted in step s200. In such a case, the base station control device 220 deletes the expired broadcast data from the accumulation unit 224.

While the preferred exemplary embodiments of the present invention have been described, it is to be understood that the present invention is not limited to the exemplary embodiments above and that further modifications, changes, and adjustments may be added without departing from the basic technical concept of the present invention.

For example, though the distribution source of broadcast data is a broadcast station in the exemplary embodiments described above, the radio base station or the base station control device may accept broadcast data and the distribution timing information from a user terminal exemplified in FIG. 2. Such a configuration allows a user, other than a broadcast operator, to distribute user-created broadcast data to the area of a specific radio base station.
The disclosure of the Patent Documents given above is incorporated by reference into this specification. The exemplary embodiments and the examples may be changed and adjusted in the scope of the entire disclosure (including claims) of the present invention and based on the basic technological concept. In the scope of the claims of the present invention, various disclosed elements may be combined and selected in a variety of ways. That is, it is apparent that the present invention includes various modifications and changes that may be made by those skilled in the art based on the entire disclosure including the claims and on the technical concept.

## Claims

1. A radio communication system comprising:
a distribution device that distributes broadcast data or multicast data; and a radio base station:
said radio base station comprising:
saving means for saving the broadcast data or multicast data received from said distribution device; and
distribution means for repeatedly distributing the saved broadcast data or multicast data to a mobile station at a predetermined distribution timing.

2. The radio communication system as defined by claim 1, wherein
the distribution timing is specified by a distribution time-of-day or a distribution period.

3. The radio communication system as defined by claim 1 or 2, wherein
the saved broadcast data or multicast data is discarded based on a saving period of the broadcast data or multicast data, said saving period being specified by said distribution device.

4. The radio communication system as defined by one of claims 1-3, wherein
said distribution means repeatedly distributes the saved broadcast data or multicast data to said mobile station at the predetermined distribution timing from a time a session start request is received from said distribution device to a time a session stop request is received.

5. The radio communication system as defined by claim 3 or 4, wherein
the distribution timing or the saving period of broadcast data or multicast data is included in a session start request message received from said distribution device.

6. The radio communication system as defined by one of claims 1-5, wherein
said distribution device is included in a core network connected to said radio base station or to a base station control device.

7. The radio communication system as defined by one of claims 1-6, wherein
instead of said distribution device, a user terminal transmits broadcast data or multicast data to said radio base station and causes said distribution means of said radio base station to repeatedly distribute the broadcast data or multicast data.

8. The radio communication system as defined by one of claims 1-7, wherein
instead of said radio base station, a base station control device comprises:
saving means for saving broadcast data or multicast data received from said distribution device; and
distribution means for repeatedly distributing the saved broadcast data or multicast data to said mobile station at a predetermined distribution timing.

9. A method for distributing broadcast data or multicast data for use in a radio communication system, said method comprising:
a step, performed by a radio base station or a base station control device in the radio communication system, for receiving broadcast data or multicast data from a distribution source and saving the received data; and
a step, performed by said radio base station or base station control device that has saved the broadcast data or multicast data, for repeatedly distributing the broadcast data or multicast data to a mobile station at a predetermined timing.

10. The method for distributing broadcast data or multicast data as defined by claim 9, wherein
the distribution timing is specified by a distribution time-of-day or a distribution period.

11. The method for distributing broadcast data or multicast data as defined by claim 9 or 10, wherein
said radio base station or base station control device discards the saved broadcast data or multicast data based on a saving period of the broadcast data or multicast data, said saving period specified by said distribution source.

12. The method for distributing broadcast data or multicast data as defined by one of claims 9-11, wherein
said radio base station or base station control device repeatedly distributes the saved broadcast data or multicast data to said mobile station at the predetermined distribution timing from a time a session start request is received from said distribution source to a time a session stop request is received.

13. The method for distributing broadcast data or multicast data as defined by one of claims 9-12, wherein
the distribution timing or a saving period of broadcast data or multicast data is included in a session start request message received from said distribution source.

14. A radio base station comprising:
saving means for saving broadcast data or multicast data received from a distribution source; and
distribution means for repeatedly distributing the saved broadcast data or multicast data to a mobile station at a predetermined distribution timing.

15. The radio base station as defined by claim 14, wherein
the distribution timing is specified by a distribution time-of-day or a distribution period.

16. The radio base station as defined by claim 14 or 15, wherein
the saved broadcast data or multicast data is discarded based on a saving period of the broadcast data or multicast data, said saving period specified by said distribution source.

17. The radio base station as defined by one of claims 14-16, wherein
said distribution means repeatedly distributes the saved broadcast data or multicast data to said mobile station at the predetermined distribution timing from a time a session start request is received from said distribution device [sic. source] to a time a session stop request is received.

18. The radio base station as defined by one of claims 14-17, wherein
the distribution timing or a saving period of broadcast data or multicast data is included in a session start request message received from said distribution source.

19. A base station control device comprising:
saving means for saving broadcast data or multicast data received from a distribution source; and
distribution means for repeatedly distributing the saved broadcast data or multicast data to a radio base station at a predetermined distribution timing.

20. A program causing a computer, which acts as a radio base station or a base station control device, to perform:
processing for receiving broadcast data or multicast data from a distribution source and saving the received data; and
processing for repeatedly distributing the saved broadcast data or multicast data to a lower-level node at a predetermined timing.
